# EUROPEAN PATENT APPLICATION

(11) **EP 3 406 334 A1**
(43) Date of publication of application: **28.11.2018**
(21) Application number: 17756139.6
(22) Date of filing: 03.02.2017
(51) Int. Cl.: B01J 19/00, B01F 3/08, B01F 5/00

(54) **FLOW PATH DEVICE AND DROPLET FORMING METHOD**

(30) Priority: 25.02.2016 JP 2016034097
(71) Applicant: Kabushiki Kaisha Kobe Seiko Sho (Kobe Steel, Ltd.), Kobe-shi, Hyogo 651-8585 (JP)
(72) Inventor: MATSUOKA, Akira, Hyogo 651-2271 (JP); NOISHIKI, Koji, Hyogo 676-8670 (JP); OZONO, Tomohiro, Hyogo 676-8670 (JP)
(74) Representative: TBK
(86) International application number: PCT/JP2017/003890
(87) International publication number: WO 2017/145697

(57) **Abstract**

A flow path device has, internally, at least one channel allowing a continuous phase liquid and a dispersed phase liquid to flow so as to form a dispersed phase droplet in the continuous phase liquid. The channel has a main channel which allows flow of the continuous phase liquid, and an auxiliary channel which is connected to a predetermined portion of the main channel to guide the dispersed phase liquid to the main channel, the predetermined portion being a portion between both ends of the main channel. The flow path device has an inner wall surface which encloses the main channel to define the main channel. The main channel has a connecting port formed in the inner wall surface and communicated with the auxiliary channel, and the inner wall surface has an enlarged surface provided at a position on a downstream side of the connecting port in the main channel, and the enlarged surface spreads to outside of the main channel so as to promote removal of the dispersed phase liquid from the inner wall surface, the dispersed phase liquid being adhered to the inner wall surface in consequence of flowing from the auxiliary channel into the main channel through the connecting port.

## Description

### Technical Field

The present invention relates to a flow path device and a droplet forming method.

### Background Art

Conventionally, a flow path device including a channel allowing a continuous phase and a dispersed phase to flow so as to form dispersed phase droplets in the continuous phase is known. The following Patent Literatures 1 and 2 each illustrate an example of such a flow path device.

A flow path device disclosed in the following Patent Literature 1 includes a plurality of microchannels disposed so as to intersect with each other, and connected to each other. In this flow path device, a dispersed phase joined from one of the microchannels to a continuous phase flowing in the other microchannel, and dispersed phase droplets are formed in the continuous phase at the joining portion. This Patent Literature 1 discloses that in a case where a base material forming the microchannels is made of acryl, oil is used for the continuous phase, and water is used for the dispersed phase, so that emulsion obtained by dispersing water particles in the oil of the continuous phase can be generated. Additionally, this Patent Literature 1 discloses that when an inner surface of the microchannel near the joining portion (intersection part) of the microchannels is subjected to hydrophilic treatment, so that wettability of the inner surface to aqueous continuous phase is reformed, emulsion obtained by dispersing oil particles in the water of the continuous phase can be generated.

A flow path device disclosed in the following Patent Literature 2 includes a micro channel having a continuous phase introduction channel into which a continuous phase is introduced and flows, and a dispersed phase introduction channel into which a dispersed phase is introduced and flows. An outlet of the continuous phase introduction channel, and an outlet of the dispersed phase introduction channel are connected at a joining portion, and a discharge channel is connected to a downstream side of the joining portion. In an inlet of the discharge channel connected to the joining portion, projections are provided so as to project from both sides in the width direction. Consequently, a channel width is locally narrowed in the inlet of the discharge channel, that is, in the outlet of the continuous phase introduction channel, and the outlet of the dispersed phase introduction channel. In a portion where this channel width is narrowed, a flow of the continuous phase is temporarily dammed, and the direction of the flow is changed, so that the dispersed phase is sheared and pulverized. As a result, dispersed phase droplets are formed in the continuous phase.

In a case where the dispersed phase droplets are formed by utilizing wettability of a channel inner wall surface due to a property of a base material forming the channel, the formable aqueous or oleaginous property of droplets is limited in accordance with the property of the base material. That is, in a case where the base material is hydrophilic, the base material is limited to a material that uses an aqueous continuous phase and an oleaginous dispersed phase, and forms oleaginous dispersed phase droplets in the aqueous continuous. On the other hand, in a case where the base material is lipophilic, the base material is limited to a material that uses an oleaginous continuous phase and an aqueous dispersed phase, and forms aqueous dispersed phase droplets in the oleaginous continuous phase.

In a case where the wettability of an inner wall surface of the channel is reformed by surface treatment of the inner wall surface, the aqueous or oleaginous property of the formable droplets does not receive limitation in accordance with the property of the base material, but work for the surface treatment of the inner wall surface of the channel is complicated.

In a case where dispersed phase droplets are formed by the channel having a local portion with a narrowed channel width, there is a high risk that the channel is blocked at the portion having the narrowed channel width, and a problem that a pressure loss is increased occurs.

### Citation List

### Patent Literature

Patent Literature 1: Japanese Patent No. 4166590
Patent Literature 2: Japanese Patent No. 4186637

### Summary of Invention

An object of the present invention is to provide a flow path device and a droplet forming method capable of forming both an aqueous and an oleaginous droplets without requiring front surface treatment of an inner wall surface defining a channel regardless of a property of a base material forming the channel, and capable of suppressing a risk of blocking of the channel and increase of a pressure loss.

A flow path device according to an aspect of the present invention is a flow path device having, internally, at least one channel allowing a continuous phase liquid and a dispersed phase liquid to flow so as to form a dispersed phase droplet in the continuous phase liquid, wherein the channel has a main channel which allows flow of the continuous phase liquid, and an auxiliary channel which is connected to a predetermined portion of the main channel to guide the dispersed phase liquid to the main channel, the predetermined portion being a portion between both ends of the main channel, the flow path device has an inner wall surface which encloses the main channel to define the main channel, the main channel has a connecting port formed in the inner wall surface and communicated with the auxiliary channel, and the inner wall surface has an enlarged surface provided at a position on a downstream side of the connecting port in the main channel, and the enlarged surface spreads to outside of the main channel so as to promote removal of the dispersed phase liquid from the inner wall surface, the dispersed phase liquid being adhered to the inner wall surface in consequence of flowing from the auxiliary channel into the main channel through the connecting port.

A droplet forming method according to another aspect of the present invention is a method for forming a dispersed phase droplet, including a droplet forming step of forming a dispersed phase droplet in a continuous phase liquid by flowing the continuous phase liquid and a dispersed phase liquid in the channel in the flow path device, wherein the droplet forming step includes a flowing step of flowing the continuous phase liquid in the main channel, and flowing the dispersed phase liquid from the auxiliary channel into the main channel through the connecting port to flow the dispersed phase liquid in the main channel, and in the flowing step, the continuous phase liquid and the dispersed phase liquid flow in the main channel such that the dispersed phase liquid flowing into the main channel is pushed by flow of the continuous phase liquid to move to a downstream side while being adhered to the inner wall surface, and is removed from the inner wall surface when reaching the enlarged surface to flow to the downstream side and be sheared, so that the dispersed phase liquid becomes the dispersed phase droplet.

### Brief Description of Drawings

FIG. 1 is a perspective view of a flow path device according to an embodiment of the present invention.
FIG. 2 is a sectional view along the lamination direction of substrates of the flow path device illustrated in FIG. 1, and the extending direction of a main channel.
FIG. 3 is a plan view of a back surface of a first substrate constituting the flow path device.
FIG. 4 is a plan view of a front surface of a second substrate constituting the flow path device.
FIG. 5 is a plan view of a front surface of a third substrate constituting the flow path device.
FIG. 6 is a partial sectional view of the flow path device along the direction orthogonal to the lamination direction of the substrates, and the extending direction of the main channel, and illustrates a forming process of droplets.
FIG. 7 is a partial sectional view of the flow path device along the lamination direction of the substrates and the extending direction of a main channel, and illustrates a forming process of droplets.
FIG. 8 is a partial sectional view of the flow path device along a VIII-VIII line in FIG. 6.
FIG. 9 is a partial sectional view of the flow path device along an IX-IX line in FIG. 6.
FIG. 10 is a partial sectional view of the flow path device along an X-X line in FIG. 6.
FIG. 11 is a partial sectional view of the flow path device along an XI-XI line in FIG. 6.
FIG. 12 is a plan view of a second substrate of a flow path device of a comparative example used in an experiment for checking the possibility of forming of droplets depending on difference of a shape of an enlarged part of the main channel, the plan view being viewed from a front surface side.
FIG. 13 is a partial sectional view equivalent to FIG. 9 of a flow path device according to a modification of the present invention.
FIG. 14 is a partial sectional view equivalent to FIG. 9 of a flow path device according to another modification of the present invention.
FIG. 15 is a partial sectional view equivalent to FIG. 9 of a flow path device according to yet another modification of the present invention.
FIG. 16 is a partial sectional view equivalent to FIG. 9 of a flow path device according to yet another modification of the present invention.
FIG. 17 is a perspective view of a multilayer flow path device according to a modification of the present invention.
FIG. 18 is a plan view of a front surface of a channel substrate constituting a flow path device of FIG. 17.

### Description of Embodiments

Hereinafter, an embodiment of the present invention will be described with reference to the drawings.

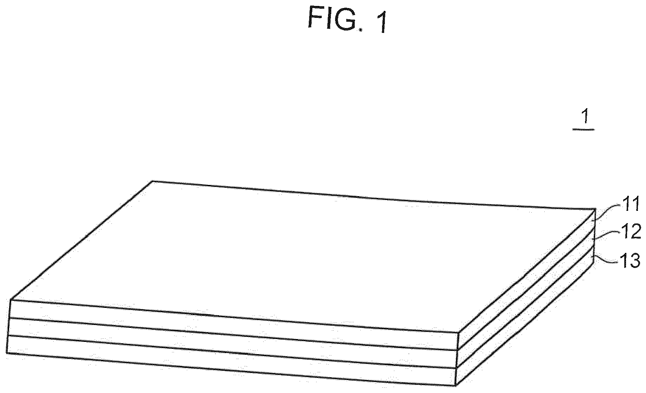

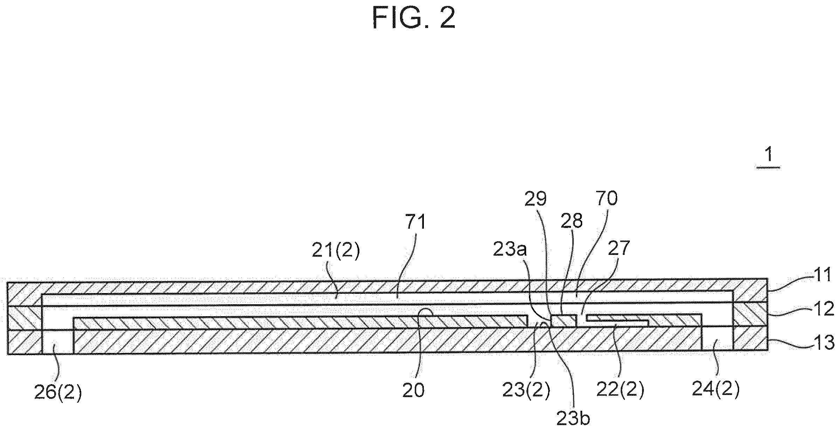

FIG. 1 illustrates a flow path device 1 according to the embodiment of the present invention. As illustrated in FIG. 2, this flow path device 1 includes, internally, a channel 2 allowing a continuous phase liquid and a dispersed phase liquid to flow so as to form dispersed phase droplets in the continuous phase liquid. This flow path device 1 is used for, for example, generation of emulsion obtained by dispersing droplets of dispersed phase fine particles in a continuous phase liquid, or generation of microcapsules composed of dispersed phase droplets.

The flow path device 1 has a first substrate 11, a second substrate 12, and a third substrate 13 laminated on each other. These substrates 11, 12, 13 each are a flat plate having an oblong (rectangle) as viewed from the direction perpendicular to a plate surface. The second substrate 12 is laminated on one of the plate surfaces of the third substrate 13, and the first substrate 11 is laminated on the plate surface of the second substrate 12, the plate surface being on a side opposite to the third substrate 13. In this state, the first substrate 11 and the second substrate 12 are joined to each other, and the second substrate 12 and the third substrate 13 are joined to each other, so that the rectangular parallelepiped flow path device 1 is formed. As each of the first, second, and third substrates 11, 12, 13, a substrate made of stainless steel or other hydrophilic material, or a substrate made of acrylic resin or other lipophilic material is used.

The channel 2 is a microchannel having a minute channel diameter. The channel 2 has a main channel 21, an auxiliary channel 22, a main channel introduction part 24, an auxiliary channel introduction part 25, and a discharge part 26.

The main channel 21 is a channel that allows flow of a continuous phase liquid. The dispersed phase liquid is joined to the continuous phase liquid flowing in this main channel 21, droplets composed of fine particles of the dispersed phase are formed, a continuous phase containing the droplets flows to a downstream side. The flow path device 1 has an inner wall surface 20 that encloses this main channel 21 to define the main channel 21.

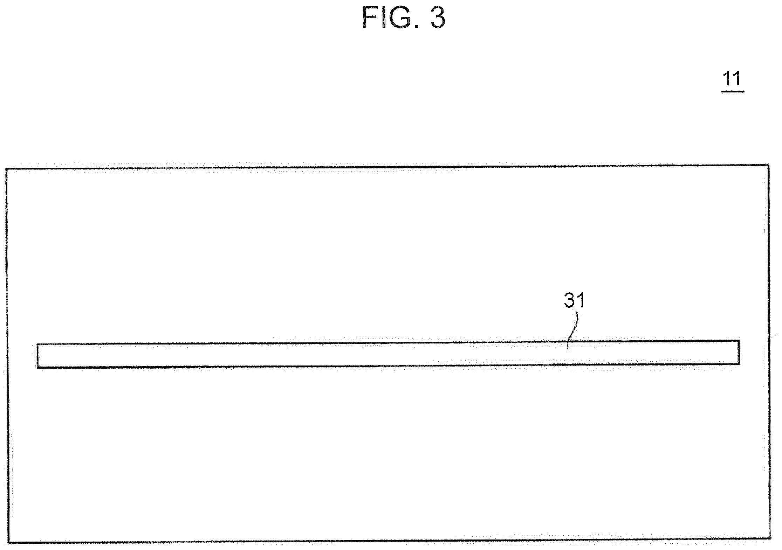

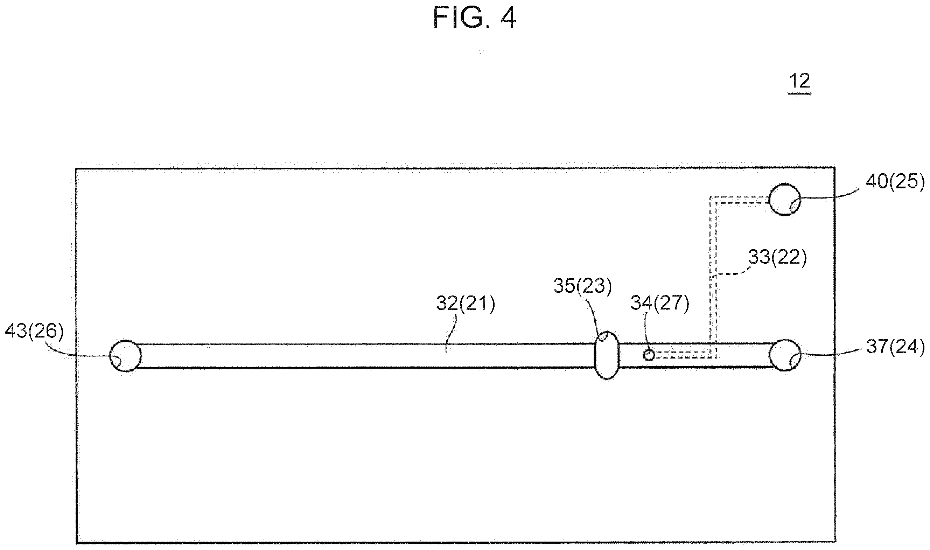

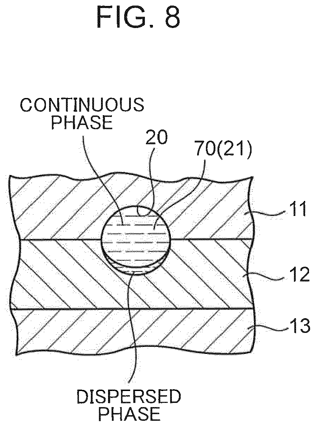

The main channel 21 linearly extends. A channel cross-section of the main channel 21 in the direction orthogonal to the extending direction of the main channel 21 is circular, as illustrated in FIG. 8. The first substrate 11 and the second substrate 12 are laminated to be joined to each other, and a first groove 31 (refer to FIG. 3) formed on the back surface side of the first substrate 11, and a second front side groove 32 (refer to FIG. 4) formed on the front surface side of the second substrate 12 overlap to be connected, so that the main channel 21 is formed.

Specifically, the first groove 31 linearly extending in the long side direction of the first substrate 11 is formed on the back surface side of the first substrate 11 that is the second substrate 12 side of the first substrate 11, as illustrated in FIG. 3. The second front side groove 32 linearly extending in the long side direction of the second substrate 12 is formed on the front surface side of the second substrate 12 that is the first substrate 11 side of the second substrate 12, as illustrated in FIG. 4. The first groove 31 and the second front side groove 32 are formed such that cross sections in the direction orthogonal to the extending direction of the first groove 31 and the second front side groove 32 each are semicircular. In a case where the first substrate 11 is laminated on the front surface of the second substrate 12, the second front side groove 32 is provided at such a position as to just overlap on the first groove 31 on the back surface of the second substrate 12. The back surface of the first substrate 11, and the front surface of the second substrate 12 are joined to each other, so that an opening of the first groove 31 on the back surface of the first substrate 11, and an opening of the second front side groove 32 on the front surface of the second substrate 12 overlap on each other, so that the first groove 31 and the second front side groove 32 are communicated, and the main channel 21 having a circular channel cross-section is formed.

As illustrated in FIG. 2, the main channel 21 has a connecting port 27, an enlarged part 23, an upstream part 70, and a downstream part 71.

The connecting port 27 is formed in the above inner wall surface 20 that defines the main channel 21. This connecting port 27 is provided at a predetermined portion between both ends of the main channel 21. The connecting port 27 is a portion that is communicated with the auxiliary channel 22. The connecting port 27 has a width smaller than a width (diameter) of the main channel 21 in the width direction of the main channel 21, the width direction being orthogonal to the extending direction of the main channel 21.

The enlarged part 23 is provided at a position on the downstream side at a distance from the connecting port 27. The enlarged part 23 is a portion having an enlarged cross-sectional area of the main channel 21 in the orthogonal direction orthogonal to the extending direction of the main channel 21. A detailed configuration of this enlarged part 23 will be described below.

The upstream part 70 is a portion located on the upstream side of the enlarged part 23 in the main channel 21. The downstream part 71 is a portion located on the downstream side of the enlarged part 23 in the main channel 21. Specific configurations of these upstream part 70 and downstream part 71 will be also described below.

The auxiliary channel 22 is connected to the connecting port 27 at the predetermined portion between the both ends of the main channel 21. This auxiliary channel 22 guides the dispersed phase liquid to the main channel 21. The auxiliary channel 22 has a first portion, a second portion, a third portion, and a fourth portion.

The first portion is a portion that extends in parallel to the main channel 21 along the back surface of the second substrate 12 from an end on the upstream side of the auxiliary channel 22 to the downstream side. The second portion is connected to an end on the downstream side of the first portion. This second portion is disposed perpendicular to the first portion, and linearly extends toward the main channel 21 along the back surface of the second substrate 12. The third portion is connected to an end on the downstream side of the second portion at such a position as to overlap on the main channel 21 as viewed from the lamination direction of the substrates 11, 12, 13. This third portion is disposed perpendicular to the second portion, and extends in parallel to the main channel 21 to the downstream side of the main channel 21. The fourth portion is connected on an end on the downstream side of the third portion at such a position as to overlap on the connecting port 27 as viewed from the lamination direction. This fourth portion is disposed perpendicular to the third portion, and extends from the end on the downstream side of the third portion toward the main channel 21 along the above lamination direction to be connected to the connecting port 27 of the main channel 21.

The auxiliary channel 22 is formed by a second back side groove 33 (refer to FIG. 4) formed on the back surface side of the second substrate 12 that is the third substrate 13 side of the second substrate 12, and a connecting part through hole 34 (refer to FIG. 4) that penetrates the second substrate 12 in the plate thickness direction.

Specifically, the second back side groove 33 having a bent shape corresponding to a shape of the auxiliary channel 22 is formed on the back surface of the second substrate 12. The connecting part through hole 34 that penetrates the second substrate 12 in the plate thickness direction is formed at a position corresponding to an end on the downstream side of the auxiliary channel 22 in the second substrate 12, that is, at a position corresponding to an end that overlaps on the first front side groove 32 in the plate thickness direction of the second substrate 12 in the second back side groove 33. The second back side groove 33 and the connecting part through hole 34 are connected. Both the second back side groove 33 formed on the back surface of the second substrate 12, and the connecting part through hole 34 are sealed by the third substrate 13 joined to the back surface of the second substrate 12, so that the auxiliary channel 22 is formed. By the connecting part through hole 34, a portion extending toward the main channel 21 in the above lamination direction in the auxiliary channel 22 to be connected to the connecting port 27 of the main channel 21 is formed.

The enlarged part 23 of the main channel 21 is provided in order to remove, from the inner wall surface 20, a dispersed phase liquid being adhered to the inner wall surface 20 on the downstream side of the connecting port 27 in consequence of flowing from the auxiliary channel 22 into the main channel 21 through the connecting port 27. The enlarged part 23 is provided in a region including a region where the dispersed phase liquid flowing from the auxiliary channel 22 into the main channel 21 through the connecting port 27 is adhered to the inner wall surface of the main channel 21 on the downstream side of the connecting port 27

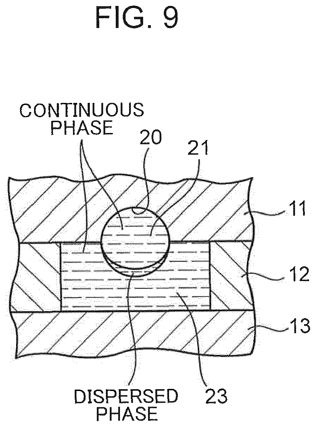

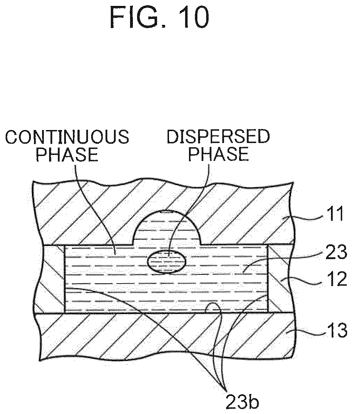

Specifically, the above inner wall surface 20 that defines the main channel 21 has an enlarged surface 23a, an extending surface 23b, and an adjacent inner wall surface 28. The enlarged surface 23a is provided at a position at a distance from the connecting port 27 on the downstream side of the connecting port 27 in the main channel 21, and spreads to the radially outside of the main channel 21. The extending surface 23b extends from the enlarged surface 23a to the downstream side. This enlarged surface 23a and the extending surface 23b form a recess (refer to FIG. 9) swollen to the radially outside of the main channel 21. The cross-sectional area of the main channel 21 in the orthogonal direction is enlarged by this recess, so that the enlarged part 23 is formed. That is, the enlarged surface 23a and the extending surface 23b define a part of a periphery of the enlarged part 23. The enlarged part 23 has a sectional shape as illustrated in FIG. 10. That is, a cross-section in the orthogonal direction of the recess of the enlarged part 23, the recess being swollen to the outside from the main channel 21, has a substantially rectangle.

The enlarged surface 23a spreads to the radially outside of the main channel 21 so as to promote removal of the dispersed phase liquid from the inner wall surface 20 (adjacent inner wall surface 28), the dispersed phase liquid being adhered to the inner wall surface 20 (adjacent inner wall surface 28) in consequence of flowing from the auxiliary channel 22 into the main channel 21 through the connecting port 27. That is, the enlarged surface 23a spreads to the outside in the cross-section in the orthogonal direction of the main channel 21. When the enlarged surface 23a is viewed from the downstream side toward the connecting port 27, the enlarged surface 23a covers the connecting port 27. Specifically, the enlarged surface 23a is provided in a region where the enlarged surface 23a overlaps on the connecting port 27 as viewed from the downstream side toward the connecting port 27, a region expanding to both sides of the above region, and a region expanding from the above region to the radially outside of the main channel 21.

The adjacent inner wall surface 28 is a portion adjacent to the upstream side of the enlarged surface 23a in the inner wall surface 20, specifically, a portion between the enlarged surface 23a and the connecting port 27 in the inner wall surface 20. The enlarged surface 23a extends from a boundary 29 between this adjacent inner wall surface 28 and the enlarged surface 23a toward the radially outside of the main channel 21. The inclination of the region from the enlarged surface 23a to the adjacent inner wall surface 28 with respect to the extending direction of the main channel 21 discontinuously changes at the boundary 29 between the enlarged surface 23a and the adjacent inner wall surface 28 as a border. In this embodiment, the adjacent inner wall surface 28 extends along the extending direction of the main channel 21, and the inclination of the adjacent inner wall surface 28 with respect to the extending direction of the main channel 21 is 0 degrees. On the other hand, the enlarged surface 23a extends in the direction orthogonal to the extending direction of the main channel 21, and the inclination of the enlarged surface 23a with respect to the extending direction of the main channel 21 is 90 degrees. The discontinuous change between the inclination of the adjacent inner wall surface 28 and the inclination of the enlarged surface 23a occurs at the boundary 29 as a border.

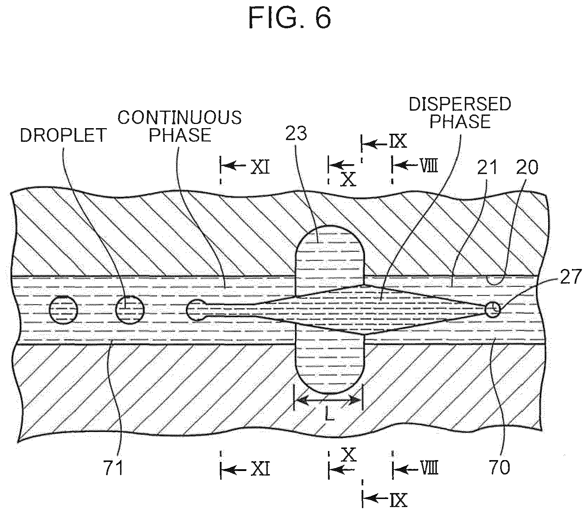

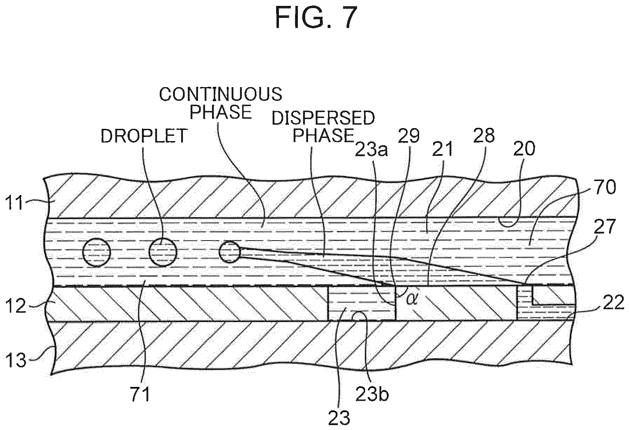

In this embodiment, an angle α (refer to FIG. 7) between the adjacent inner wall surface 28 and the enlarged surface 23a is 90 degrees. The size L (refer to FIG. 6) of the enlarged part 23 in the extending direction of the main channel 21 is 0.1 mm or more, and preferably 5 mm or more. The enlarged part 23 projects to the both sides of the main channel 21 in the direction orthogonal to the extending direction of the main channel 21 as viewed from the lamination direction of the substrates 11, 12, 13.

In all portions located between the connecting port 27 and the enlarged part 23 in the main channel 21 in the extending direction of the main channel 21, cross-sectional areas in the above orthogonal direction are equal. Specifically, all the cross-sections in the above orthogonal direction of the portions have the same shape. The respective cross-sectional area in the above orthogonal direction of this portion of the main channel 21, and the upstream part 70 composed of the portion on the upstream side with respect to the above portion are each smaller than the cross-sectional area in the above orthogonal direction of the enlarged part 23.

The cross-sectional area in the above orthogonal direction of the downstream part 71 is smaller than the cross-sectional area in the above orthogonal direction of the enlarged part 23.

The recess of the enlarged part 23 is formed by an enlarged part through hole 35 (refer to FIG. 4) that penetrates the second substrate 12 in the plate thickness direction. Specifically, the enlarged part through hole 35 is provided at a position on the downstream side of the main channel 21 with respect to the connecting port 27 in the second substrate 12. The enlarged part through hole 35 projects to both sides in the width direction of the second front side groove 32.

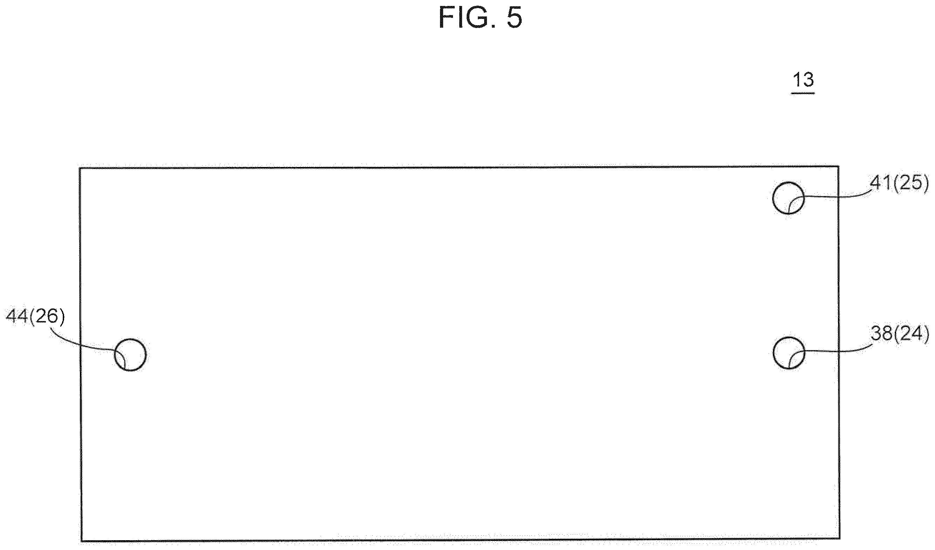

The main channel introduction part 24 is connected to an end on the upstream side of the main channel 21. This main channel introduction part 24 is a portion that guides a continuous phase liquid to the main channel 21. That is, the continuous phase liquid is introduced to the main channel 21 through this main channel introduction part 24. The main channel introduction part 24 is formed by a first main introduction hole 37 (refer to FIG. 4) that penetrates the second substrate 12 in the plate thickness direction, and a second main introduction hole 38 (refer to FIG. 5) that penetrates the third substrate 13 in the plate thickness direction. Specifically, the first main introduction hole 37 is provided at a position corresponding to the end on the upstream side of the main channel 21 in the second substrate 12. The second main introduction hole 38 is provided at such a position as to overlap on the first main introduction hole 37 in the third substrate 13. The second substrate 12 and the third substrate 13 are laminated and joined, so that the first main introduction hole 37 and the second main introduction hole 38 are connected, and the main channel introduction part 24 is formed.

The auxiliary channel introduction part 25 is connected to the end on the upstream side of the auxiliary channel 22. This auxiliary channel introduction part 25 is a portion that guides a dispersed phase liquid to the auxiliary channel 22. That is, the dispersed phase liquid is introduced to the auxiliary channel 22 through this auxiliary channel introduction part 25. The auxiliary channel introduction part 25 is formed by a first auxiliary introduction hole 40 (refer to FIG. 4) that penetrates the second substrate 12 in the plate thickness direction, and a second auxiliary introduction hole 41 (refer to FIG. 5) that penetrates the third substrate 13 in the plate thickness direction. Specifically, the first auxiliary introduction hole 40 is provided at a position of the end on the upstream side of the auxiliary channel 22 in the second substrate 12. The second auxiliary introduction hole 41 is provided at such a position as to overlap on the first auxiliary introduction hole 40 in the third substrate 13.
The second substrate 12 and the third substrate 13 are laminated and joined, so that the first auxiliary introduction hole 40 and the second auxiliary introduction hole 41 are connected, and the auxiliary channel introduction part 25 is formed.

The discharge part 26 is connected to an end on the downstream side of the main channel 21, and is a portion that guides a continuous phase liquid containing dispersed phase droplets from the end on the downstream side of the main channel 21 to the outside of the flow path device 1. The discharge part 26 is formed by a first discharge hole 43 (refer to FIG. 4) that penetrates the second substrate 12 in the plate thickness direction, and a second discharge hole 44 (refer to FIG. 5) that penetrates the third substrate 13 in the plate thickness direction. Specifically, the first discharge hole 43 is provided at a position of the end on the downstream side of the main channel 21 in the second substrate 12. The second discharge hole 44 is provided at a position corresponding to the end on the downstream side of the main channel 21 in the third substrate 13. That is, the second discharge hole 44 is provided at such a position as to overlap on the first discharge hole 43 in the third substrate 13. The second substrate 12 and the third substrate 13 are laminated and joined, so that the first discharge hole 43 and the second discharge hole 44 are connected, and the discharge part 26 is formed.

Now, a method for forming dispersed phase droplets according to this embodiment will be described.

First, the flow path device 1 having the above configuration is prepared.

Specifically, the first, second, and third substrates 11, 12, 13 are processed so as to have the above configuration, and these substrates are laminated, and joined to each other, so that the flow path device 1 is manufactured. In this manufacturing process, the enlarged part 23 is formed in such a shape as to remove, from the inner wall surface 20, a dispersed phase liquid that moves to the downstream side while being adhered to the inner wall surface 20 (adjacent inner wall surface 28), and reaches the enlarged part 23. Such a specific shape of the enlarged part 23 is described as above.

A droplet forming step of forming dispersed phase droplets in a continuous phase liquid is performed by use of the prepared (manufactured) flow path device 1. Specifically, the following droplet forming step is performed.

While the continuous phase liquid is introduced to the main channel 21 through the main channel introduction part 24, the dispersed phase liquid is introduced to the auxiliary channel 22 through the auxiliary channel introduction part 25. In a case where aqueous droplets are generated, an oleaginous liquid is introduced to the main channel 21, as the continuous phase, and an aqueous liquid is introduced to the auxiliary channel 22, as the dispersed phase. In a case where oleaginous droplets are generated, an aqueous liquid is introduced to the main channel 21, as the continuous phase, and an oleaginous liquid is introduced to the auxiliary channel 22, as a dispersed phase.

As the above aqueous liquid, for example, water, water soluble resin, aqueous polymerizable monomer, a solution of water soluble resin, or a solution of polymerizable monomer is used. As the above oleaginous liquid, for example, vegetable oil, mineral oil, hydrocarbon cleaning solvent, fluorine solvent, or solution using any of these as a solvent is used.

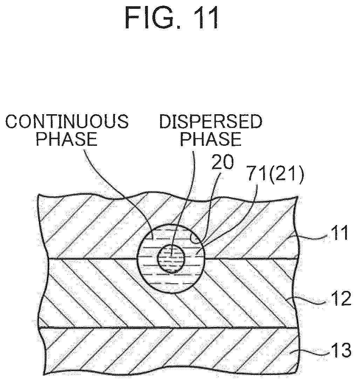

The continuous phase liquid introduced into the main channel 21 flows through the main channel 21 to the downstream side. The dispersed phase introduced into the auxiliary channel 22 flows through the auxiliary channel 22 to the downstream side, and is introduced into the main channel 21 from the connecting port 27. In a case where affinity between the dispersed phase liquid, and the materials of the substrates 11, 12 formed with the main channel 21 is high, that is, in a case where the materials of the substrates 11, 12 are hydrophilic, and the dispersed phase is an aqueous liquid, or in a case where the materials of the substrates 11, 12 are lipophilic, and the dispersed phase is an oleaginous liquid, the dispersed phase liquid introduced from the connecting port 27 into the main channel 21 is pushed by flow of the continuous phase liquid to move to the downstream side while being adhered to the inner wall surface 20 on the downstream side of the connecting port 27, that is, the adjacent inner wall surface 28, as illustrated in FIG. 7 and FIG. 8. Then, when the dispersed phase liquid adhered to this inner wall surface 20 exceeds the boundary 29 to reach the enlarged part 23, the dispersed phase liquid is removed from the inner wall surface 20, as illustrated in FIG. 7 and FIG. 10. Thereafter, in a state where the periphery of the dispersed phase liquid is covered with the continuous phase liquid, the dispersed phase liquid flows in the continuous phase liquid to thinly extend to the downstream side of the main channel 21, and is sheared to become droplets, as illustrated in FIG. 7 and FIG. 11. The liquid composed of the continuous phase containing the droplets thus formed flows through the main channel 21 to the downstream side, and is discharged to the outside of the flow path device 1 through the discharge part 26.

In a case where the dispersed phase liquid has low affinity with the materials of the substrates 11, 12 forming the main channel 21, that is, in a case where the materials of the substrates 11, 12 are hydrophilic, and the dispersed phase is an oleaginous liquid, or in a case where the materials of the substrates 11, 12 are lipophilic, and the dispersed phase is an aqueous liquid, the dispersed phase liquid introduced from the connecting port 27 into the main channel 21 is not adhered to the adjacent inner wall surface 28, described above. In this case, the periphery of the dispersed phase liquid is covered with the continuous phase liquid just after being introduced into the main channel 21, and is carried by the flow of the continuous phase liquid in this state to extend to the downstream side, and becomes droplets.

As described above, formation of droplets by the flow path device 1 of this embodiment is formed.

In this embodiment, as described above, in the a case where the dispersed phase liquid has high affinity with the materials of the substrates 11, 12 formed with the main channel 21, that is, in the case where the materials of the substrates 11, 12 are hydrophilic, and the dispersed phase is an aqueous liquid, or in the case where the materials of the substrates 11, 12 are lipophilic, and the dispersed phase is an oleaginous liquid, the dispersed phase liquid introduced from the connecting port 27 into the main channel 21 is adhered to the adjacent inner wall surface 28. The enlarged surface 23a that spreads to the radially outside of the main channel 21 so as to promote removal of the dispersed phase liquid adhered to this adjacent inner wall surface 28 is provided on the downstream side of the connecting port 27, and therefore the dispersed phase liquid removed from the inner wall surface 20 in the region corresponding to the enlarged surface 23a is carried by the flow of the continuous phase liquid in the main channel 21 to thinly extend to the downstream side, is sheared, and becomes droplets.

As described above, in the case where the dispersed phase liquid has low affinity with the materials of the substrates 11, 12 formed with the main channel 21, that is, in the case where the materials of the substrates 11, 12 are hydrophilic, and the dispersed phase is an oleaginous liquid, or in the case where the materials of the substrates 11, 12 are lipophilic, and the dispersed phase is an aqueous liquid, the dispersed phase liquid introduced from the connecting port 27 into the main channel 21 becomes droplets in the main channel 21 without being adhered to the adjacent inner wall surface 28.

Therefore, in this embodiment, regardless of whether the materials of the substrates 11, 12 formed with the main channel 21 are hydrophilic or lipophilic, any of aqueous or oleaginous dispersed phase droplets can be formed without performing front surface treatment of the inner wall surface 20 for improving affinity of the inner wall surface 20 to the continuous phase.

In the flow path device 1 of this embodiment, unlike a conventional flow path device, droplets can be formed without locally providing a portion having a narrowed channel width in the main channel, and therefore it is possible to suppress a risk of blocking of the main channel 21, and increase of a pressure loss.

In this embodiment, the inclination of the region from the enlarged surface 23a to the adjacent inner wall surface 28 discontinuously changes at the boundary 29 between the enlarged surface 23a and the adjacent inner wall surface 28 as a border. Specifically, an angle α between the enlarged surface 23a and the adjacent inner wall surface 28 is 90 degrees. Therefore, when the dispersed phase liquid adhered to the adjacent inner wall surface 28 moves to the downstream side to exceed the boundary 29, the dispersed phase liquid is likely to be removed from the inner wall surface 20.

In this embodiment, in a case where the enlarged surface 23a is viewed from the downstream side to the connecting port 27, the enlarged surface 23a covers the connecting port 27. Consequently, an adhesion range of the dispersed phase liquid adhered to the adjacent inner wall surface 28 on the downstream side of the connecting port 27 in consequence of flowing from the connecting port 27 into the main channel 21 can be covered by the enlarged surface 23a. Therefore, it is possible to reliably improve the removal of the dispersed phase liquid.

In this embodiment, the cross-sectional area in the above orthogonal direction of the downstream part 71 located on the downstream side of the main channel 21 with respect to the enlarged part 23 is smaller than the cross-sectional area on the above orthogonal direction of the enlarged part 23. Therefore, the size of a droplet formed in the main channel 21 by action of the enlarged surface 23 a can be controlled to the size reduced on the downstream side of the enlarged part 23.

Specifically, the larger the cross-sectional area in the above orthogonal direction of the downstream part 71 located on the downstream side with respect to the enlarged part 23 is, the larger the size of the formed droplet is. Additionally, the smaller the cross-sectional area is, the smaller the size is. That is, the formed droplet has size corresponding to the size of the cross-sectional area in the above orthogonal direction of the downstream part 71. Accordingly, like this embodiment, the cross-sectional area in the above orthogonal direction of the downstream part 71 is smaller than the cross-sectional area in the above orthogonal direction of the enlarged part 23, so that the size of the formed droplet can be controlled to smaller size.

Now, a result of an experiment, in which the possibility of forming of droplets depending on difference of a shape of the enlarged part 23 of the main channel 21 is checked, will be described.

As a flow path device according to an example, a flow path device that has a similar configuration to the flow path device 1 according to the above embodiment, and including a main channel 21 having an inner diameter set as follows, and an enlarged part 23 having a size set as follows, was prepared. That is, the flow path device, in which the inner diameter of the main channel 21 (diameter of the cross-section of the main channel 21) was set to 2 mm, and the size of the enlarged part 23 in the extending direction of the main channel 21 (hereinafter referred to as the length of the enlarged part 23) was set to 2 mm, and the size of the enlarged part 23 (hereinafter referred to as the width of the enlarged part 23) in the direction orthogonal to the extending direction of the main channel 21 along a front surface of a second substrate 12 was set to 4 mm, was prepared as the flow path device according to the example. In the flow path device according to this example, the width of the enlarged part 23 is larger than the inner diameter (width) of the main channel 21, and the enlarged part 23 projects to both sides in the width direction of the main channel 21 (refer to FIG. 4) in a case where substrates 11, 12, 13 constituting the flow path device 1 is viewed from the lamination direction.

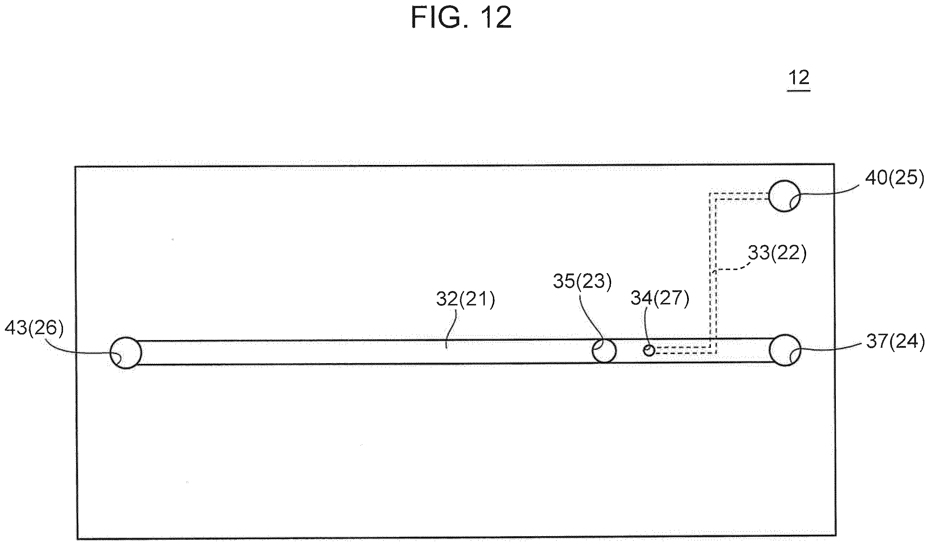

As a flow path device according to a comparative example, a flow path device that was different from the flow path device according to the example only in the width of an enlarged part 23 was prepared. That is, the flow path device, in which the inner diameter of a main channel 21 (diameter of the cross-section of the main channel 21) was set to 2 mm, and the length of the enlarged part 23 was set to 2 mm, and the width of the enlarged part 23 was set to 2 mm equal to the inner diameter of the main channel 21, was prepared as the flow path device according to the comparative example. In the flow path device according to this comparative example, the width of the enlarged part 23 is equal to the inner diameter (width) of the main channel 21, and the enlarged part 23 is within the width of the main channel 21 as viewed from the lamination direction of substrates 11, 12, 13 constituting the flow path device 1, as illustrated in FIG. 12A.

In order to observe whether or not droplets are formed in the main channel 21, transparent materials were used as the respective substrates 11, 12, 13 constituting the flow path devices of the example and the comparative example.

A continuous phase and a dispersed phase were flowed in each of the channel of the flow path device of the example and the channel of the flow path device of the comparative example in the same condition. Specifically, an oleaginous solution as the continuous phase was allowed to flow in the main channel 21 at a flow rate of 40 ml/min, and an aqueous solution as a dispersed phase was allowed to flow in an auxiliary channel 22 at a flow rate of 1 ml/min. As a result, in the example, an aqueous solution as the dispersed phase, the aqueous solution flowing from the auxiliary channel 22 into the main channel 21 through the connecting port 27 exhibited a behavior as described in the above embodiment, and it was found that droplets of the aqueous solution were formed in the main channel 21. On the other hand, in the comparative example, even when an aqueous solution as the dispersed phase, the aqueous solution being introduced from the auxiliary channel 22 into the main channel 21 through the connecting port 27 reached the enlarged part 23, the aqueous solution was not removed from the inner wall surface 20, but moved to the downstream side of the enlarged part 23 while being adhered to the inner wall surface 20, and it was found that droplets of the aqueous solution was not formed.

From these results of the experiment, it was found that the enlarged part 23 having a width larger than the inner diameter (width) of the main channel 21 was preferable in order to form droplets in the main channel 21.

The flow path device according to the present invention is not always limited to the above embodiment. As the configuration of the flow path device according to the present invention, for example, the following configuration can be employed.

The shape of the cross-section in the above orthogonal direction of the main channel is not always limited to a circle, and various shapes other than the circle can be employed as the shape of the cross-section.

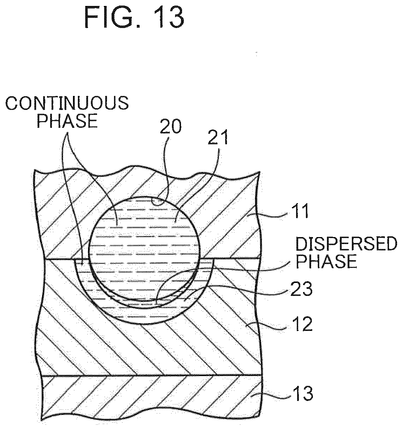

The shape of the enlarged part is not always limited to the above shape, and various shapes other than the above shape can be employed as the shape of the enlarged part. FIG. 13 to FIG. 16 illustrate shapes of cross-sections in the above orthogonal direction of enlarged parts according to various modifications.

In the modification illustrated in FIG. 13, an enlarged part 23 has a circumferential part of the cross-section of the enlarged part 23 in the above orthogonal direction, and this circumferential part is formed in an arc along the circumferential part of the circular cross-section of the main channel 21 in the above orthogonal direction. In this modification, the enlarged part 23 is provided in a region covering a semicircular portion of the cross-section in the above orthogonal direction of the main channel 21.

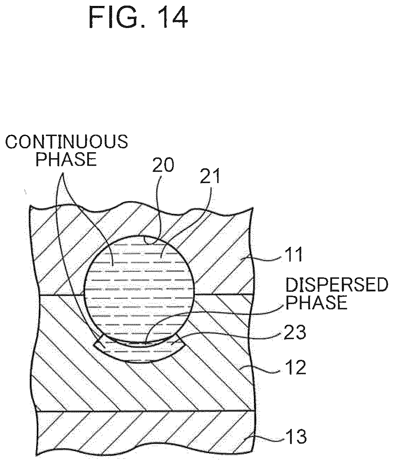

In the modification illustrated in FIG. 14, similarly to the modification of FIG. 13, the enlarged part 23 has a circumferential part of the cross-section of the enlarged part 23 in the above orthogonal direction, and this circumferential part is formed in an arc along the circumferential part of the circular cross-section of the main channel 21 in the above orthogonal direction. However, in this modification of FIG. 14, the enlarged part 23 is provided in a narrower region in the circumferential direction of the main channel 21 compared to the modification of FIG. 13. The size of the region of the enlarged part 23 in the circumferential direction of the main channel 21 may be set in accordance with the size of the region where the dispersed phase liquid is adhered to the inner wall surface 20. That is, the region where the enlarged part 23 is provided only needs to cover the region where the dispersed phase liquid is adhered to the inner wall surface 20. Accordingly, in a case where the region where the dispersed phase liquid is adhered to the inner wall surface 20 is large in the circumferential direction of the main channel 21, the region where the enlarged part 23 is provided may be increased so as to cover the region where the dispersed phase liquid is adhered. Additionally, in a case where the region where the dispersed phase liquid is adhered to the inner wall surface 20 is small in the circumferential direction of the main channel 21, the region where the enlarged part 23 is provided may be reduced within a range in which the region where the dispersed phase liquid is adhered can be covered.

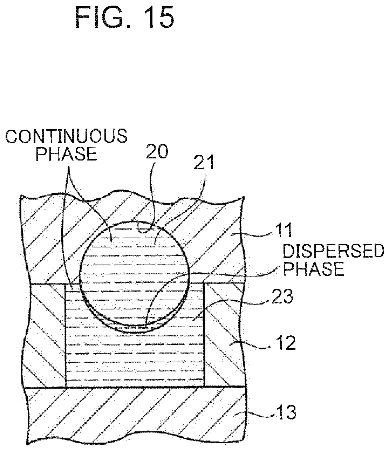

In the modification illustrated in FIG. 15, the enlarged part 23 has a width smaller than the width of the enlarged part 23 of the above embodiment in the above orthogonal direction. Thus, the width of the enlarged part 23 may be arbitrarily set. Additionally, the depth in the direction orthogonal to the width of the enlarged part 23 may be arbitrarily set.

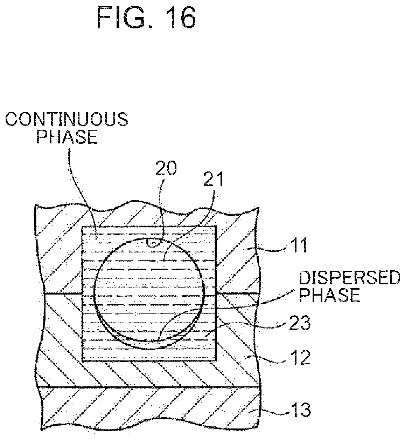

In the modification illustrated in FIG. 16, the enlarged part 23 is provided so as to enlarge to the radially outside of the main channel 21 over the entire circumference of the main channel 21. An outer shape of the cross-section in the above orthogonal direction of this enlarged part 23 is a rectangle. In this modification, the outer shape of the cross-section of the enlarged part 23 may be a circle concentric with the main channel 21, for example, or may be a shape other than the above.

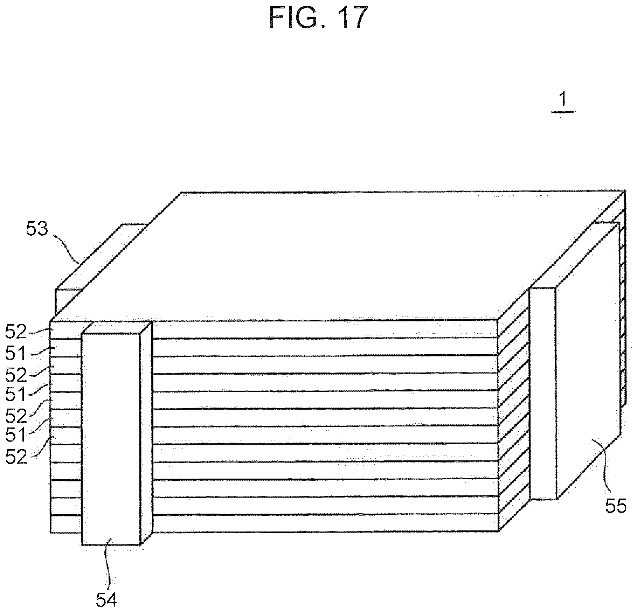

The flow path device may include a channel layer provided with a plurality of channels disposed in parallel to each other. The flow path device includes a plurality of such channel layers, and may have a structure in which the plurality of channel layers are laminated. A flow path device 1 of a modification having such a configuration is illustrated in FIG. 17.

The flow path device 1 according to this modification includes a plurality of channel substrates 51, a plurality of sealing plates 52, a main supply header 53, an auxiliary supply header 54, and a discharge header 55.

The channel substrates 51 and the sealing plates 52 are flat plates having the same oblong shape (rectangular shape) as viewed from the direction perpendicular to the plate surfaces. The channel substrates 51 and the sealing plates 52 are alternately laminated and joined to each other. Consequently, a rectangular parallelepiped laminated body composed of the plurality of channel substrates 51 and the plurality of sealing plates 52 is formed.

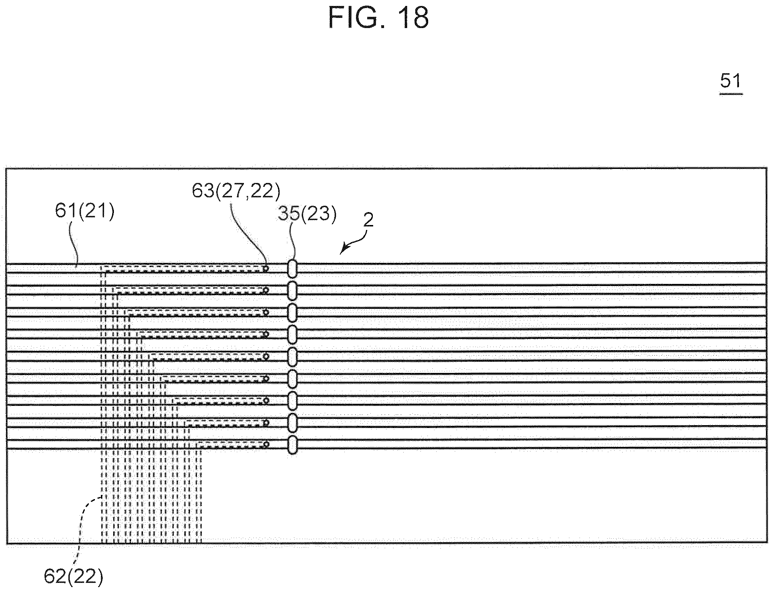

The channel substrates 51 are an example of the channel layers according to the present invention. As illustrated in FIG. 18, the channel substrates 51 are provided with a plurality of channels 2 disposed in parallel to each other. The channels 2 each have a main channel 21, an auxiliary channel 22, and an enlarged part 23.

The main channels 21 linearly extend in the long side direction of the channel substrate 51 on the front surface side of the channel substrate 51. An end on the upstream side of each main channel 21 is opened on a side surface, on which the side surface having one of short sides of the channel substrate 51 is disposed, of the flow path device 1. An end on the downstream side of the main channel 21 is opened on a side surface opposite to the side surface, on which the end on the upstream side of each main channel 21 is disposed, of the flow path device 1. The main channels 21 are each formed by a front side groove 61 formed on the front surface side of each channel substrate 51. Specifically, openings of the front side grooves 61 on a front surface of each channel substrate 51 is sealed by the sealing plate 52 joined to this front surface, so that the main channels 21 are formed.

The auxiliary channels 22 each have a first portion, a second portion, and a third portion. Each first portion is a portion that linearly extends from one of long sides of the channel substrate 51 toward the other long side in the short side direction of the channel substrates 51 on the back surface side of the channel substrate 51. Each second portion is connected to an end on the downstream side of the first portion at such a position as to overlap on the corresponding to main channel 21. The second portion is disposed perpendicular to the first portion, and extending to the downstream side along the corresponding to the main channel 21. Each third portion is connected to an end on the downstream side of the second portion. This third portion is disposed perpendicular to the second portion, and extends from the end on the downstream side of the second portion toward the corresponding main channel 21 to be connected to the main channel 21. The end on the upstream side of the auxiliary channel 22 is opened on the side surface, on which the end is located, and the long side of the channel substrate 51 is disposed, of the flow path device 1.

The auxiliary channels 22 are each formed by a back side groove 62 formed on the back surface side of each channel substrate 51, and a connecting part through hole 63 that penetrates each channel substrate 51 in the plate thickness direction. Specifically, openings of the back side grooves 62 and openings of the connecting part through holes 63 on a back surface of each channel substrate 51 are sealed by the sealing plate 52 joined to this back surface, so that the auxiliary channels 22 are formed. The connecting ports 27 of the main channels 21 connected to ends on the downstream side of the auxiliary channels 22 are formed by the connecting part through holes 63.

Each enlarged part 23 is formed similarly to the enlarged part 23 according to the above embodiment. That is, each enlarged part through hole 35 having a similar configuration to the enlarged part through hole 35 according to the above embodiment is formed in the channel substrates 51 at a distance from the connecting port 27 of the main channel 21 to the downstream side. Openings of the enlarged part through holes 35 on the front surface of each channel substrate 51 are sealed by the sealing plate 52 joined to this front surface, and openings of the enlarged part through holes 35 on the back surface of the channel substrate 51 are sealed by the sealing plate 52 joined to this back surface, so that the enlarged parts 23 are formed.

Functions and basic configurations of the main channels 21, the auxiliary channels 22, the enlarged parts 23, and the connecting ports 27 according to this modification are similar to the functions and basic configurations of the main channel 21, the auxiliary channel 22, the enlarged part 23, and the connecting port 27 according to the above embodiment.

The main supply header 53 is a part that supplies a continuous phase liquid to the respective main channels 21. This main supply header 53 is mounted on the side surface of the flow path device 1, the side surface being opened by the respective ends on the upstream side of the main channels 21. The main supply header 53 collectively covers all the ends on the upstream side of the main channels 21, the ends being opened in the side surface of the flow path device 1, the side surface being mounted with the ends. Consequently, an internal space of the main supply header 53 is communicated with all the ends on the upstream side of the main channels 21 provided in the flow path device 1. A pipe (not illustrated) is connected to the main supply header 53. The continuous phase liquid is supplied to the internal space of the main supply header 53 through this pipe, and the supplied continuous phase liquid is distributed and introduced from the internal space of the main supply header 53 to the main channels 21.

The auxiliary supply header 54 is a part that supplies a dispersed phase liquid to the respective auxiliary channels 22. The auxiliary supply header 54 is mounted on the side surface of the flow path device 1, the side surface being opened by the respective ends on the upstream side of the auxiliary channels 22. The auxiliary supply header 54 collectively covers all the ends on the upstream side of the auxiliary channels 22, the ends being opened in the side surface of the flow path device 1, the side surface being mounted with the ends. Consequently, an internal space of the auxiliary supply header 54 is communicated with all the ends on the upstream side of the auxiliary channels 22 provided in the flow path device 1. A pipe (not illustrated) is connected to the auxiliary supply header 54. The dispersed phase liquid is supplied to the internal space of the auxiliary supply header 54 through this pipe, and the supplied dispersed phase liquid is distributed and introduced from the internal space of the auxiliary supply header 54 to the auxiliary channels 22.

In the flow path device 1 according to this modification, the dispersed phase droplets are formed in the continuous phase in the main channel 21 of the channel 2 in a process similar to the case of the above embodiment.

In the flow path device 1 according to this modification, it is possible to manufacture droplets in a plurality of the channels 2 arranged in each channel substrate 51 at the same time. In addition, a large number of the channel substrates 51 are laminated, and therefore it is possible to manufacture a large number of droplets at the same time. Therefore, it is possible to significantly improve manufacturing efficiency of droplets.

In the flow path device 1 according to this modification, a plurality of the channels 2 are provided in parallel in each channel substrate 51, and a plurality of the channel substrates 51 are laminated. Therefore, it is possible to collect a large number of the channels 2 in the flow path device 1 while suppressing increase in the size of the flow path device 1. Therefore, in this modification, it is possible to significantly improve manufacturing efficiency of droplets while suppressing increase of the size in the flow path device 1.

The flow path device according to the present invention may not always include a plurality of the channel substrates each provided with a plurality of the channels disposed in parallel to each other. That is, the flow path device may include only such a single channel substrate.

The angle between the adjacent inner wall surface and the enlarged surface is not limited to 90 degrees. That is, as long as the angle is an angle enabling removal from the inner wall surface when the dispersed phase adhered to the adjacent inner wall surface exceeds the boundary between the adjacent inner wall surface and the enlarged surface to move to the downstream side, the angle between the adjacent inner wall surface and the enlarged surface may be any angle. However, from the viewpoint of easiness of removal of the dispersed phase adhered to the inner wall surface, this angle is preferably 135 degrees or less, and is more preferably 90 degrees or less.

The droplet forming method according to the present invention may not always include a preparing process of preparing the flow path device or a manufacturing step of the flow path device, the manufacturing step being the preparing step. For example, the droplet forming method according to the present invention may be a method for forming droplets by simply using the existing flow path device.

[Summary of Embodiment and Modification]

The above embodiment and the above modifications are summarized as follows.

The flow path device according to each of the above embodiment and the above modifications is a flow path device having, internally, at least one channel allowing a continuous phase liquid and a dispersed phase liquid to flow so as to form a dispersed phase droplet in the continuous phase liquid, wherein the channel has a main channel which allows flow of the continuous phase liquid, and an auxiliary channel which is connected to a predetermined portion of the main channel to guide the dispersed phase liquid to the main channel, the predetermined portion being a portion between both ends of the main channel, the flow path device has an inner wall surface which encloses the main channel to define the main channel, the main channel has a connecting port formed in the inner wall surface and communicated with the auxiliary channel, and the inner wall surface has an enlarged surface provided at a position on a downstream side of the connecting port in the main channel, and the enlarged surface spreads to outside of the main channel so as to promote removal of the dispersed phase liquid from the inner wall surface, the dispersed phase liquid being adhered to the inner wall surface in consequence of flowing from the auxiliary channel into the main channel through the connecting port.

In this flow path device, the enlarged surface, which spreads to the outside of the main channel so as to promote the removal of the dispersed phase liquid adhered to the inner wall surface in consequence of flowing from the connecting port is provided on the downstream side of the connecting port, and therefore the dispersed phase liquid removed from the inner wall surface on the enlarged surface is carried by the flow of the continuous phase liquid in the main channel to thinly extend to the downstream side, and is sheared, so that the dispersed droplet can formed. Accordingly, in this flow path device, it is possible to form both aqueous and oleaginous dispersed phase droplets without performing front surface treatment of the inner wall surface for improving affinity of the inner wall surface to the continuous phase regardless of the property of the material of the base material forming the channel. In this flow path device, unlike a conventional flow path device, a droplet can be formed without locally providing a portion having a narrowed channel width in a main channel, and therefore it is possible to suppress a risk of blocking of the channel, and increase of pressure loss.

In the flow path device, the inner wall surface preferably has an adjacent inner wall surface adjacent to an upstream side of the enlarged surface, and an inclination of a region of the inner wall surface from the enlarged surface to the adjacent inner wall surface preferably discontinuously changes at a boundary between the enlarged surface and the adjacent inner wall surface.

According to this configuration, when the dispersed phase liquid adhered to the adjacent inner wall surface moves to the downstream side, and exceeds the boundary to reach the enlarged surface, the dispersed phase liquid is likely to be removed from the inner wall surface.

In the flow path device, the enlarged surface preferably covers the connecting port when the enlarged surface is viewed from a downstream side of the enlarged surface toward the connecting port.

According to this configuration, an adhesion range of the dispersed phase liquid adhered to the inner wall surface on the downstream side of the connecting port in consequence of flowing from the connecting port into the main channel can be covered by the enlarged surface. Therefore, it is possible to improve reliability of the removal of the dispersed phase liquid.

In the flow path device, the main channel preferably has an enlarged part having a periphery, at least a part of which is defined by the enlarged surface, and a downstream part which is located on the downstream side of the enlarged part, the enlarged part having a first cross-sectional area in an orthogonal direction orthogonal to an extending direction of the main channel, the downstream part having a second cross-sectional area in the orthogonal direction, and the second cross-sectional area is preferably smaller than the first cross-sectional area.

According to this configuration, the size of the droplet formed in the main channel by action of the enlarged surface can be controlled to the size reduced on the downstream side of the enlarged part. Specifically, the larger the cross-sectional area in the above orthogonal direction of the downstream part located on the downstream side of the main flow part is, the larger the size of the formed droplet is. Additionally, the smaller the cross-sectional area is, the smaller the size is. That is, the formed droplet has size corresponding to the size of the cross-sectional area of the portion on the downstream side of the main channel.
Accordingly, like this configuration, the second cross-sectional area of the downstream part located on the downstream side of the enlarged part in the main channel is smaller than the first cross-sectional area of the enlarged part, so that the size of the formed droplet can be controlled to smaller size.

In the flow path device, at least the one channel preferably includes a plurality of the channels, and the flow path device preferably further includes at least one channel layer in which the plurality of channels are disposed in parallel to each other.

According to this configuration, it is possible to manufacture the droplets in the plurality of channels at the same time, and it is possible to improve manufacturing efficiency of the droplets. Additionally, the plurality of channels are provided in parallel in the channel layer, so that it is possible to prevent significant increase of the size of the channel layer. Therefore, in this configuration, it is possible to improve manufacturing efficiency of the droplets while suppressing increase of the size of the flow path device.

In this case, at least the one channel layer preferably includes a plurality of the channel layers laminated on each other.

According to this configuration, it is possible to manufacture droplets in a larger amount of the channels at the same time, and therefore it is possible to further improve manufacturing efficiency of the droplets. Additionally, a plurality of the channel layers each provided with a plurality of the channels disposed in parallel are laminated, so that it is possible to collect a large number of the channels in the flow path device with compact size. Therefore, in this configuration, it is possible to further improve manufacturing efficiency of the droplets while suppressing increase of the size of the flow path device.

A droplet forming method according to each of the above embodiment and the above modifications is a method for forming a dispersed phase droplet, including a droplet forming step of forming a dispersed phase droplet in a continuous phase liquid by flowing the continuous phase liquid and a dispersed phase liquid in the channel in the flow path device, wherein the droplet forming step includes a flowing step of flowing the continuous phase liquid in the main channel, and flowing the dispersed phase liquid from the auxiliary channel into the main channel through the connecting port to flow the dispersed phase liquid in the main channel, and in the flowing step, the continuous phase liquid and the dispersed phase liquid flow in the main channel such that the dispersed phase liquid flowing into the main channel is pushed by flow of the continuous phase liquid to move to a downstream side while being adhered to the inner wall surface, and is removed from the inner wall surface when reaching the enlarged surface to flow to the downstream side and be sheared, so that the dispersed phase liquid becomes the dispersed phase droplet.

In this droplet forming method, effects similar to the effect obtained by the flow path device are obtained.

As described above, according to the above embodiment and the above modifications, it is possible to provide a flow path device and a droplet forming method capable of forming both an aqueous and an oleaginous droplets without requiring front surface treatment of an inner wall surface of a channel regardless of a property of a base material forming the channel, and capable of suppressing a risk of blocking of the channel and increase of a pressure loss.

## Claims

1. A flow path device comprising, internally, at least one channel allowing a continuous phase liquid and a dispersed phase liquid to flow so as to form a dispersed phase droplet in the continuous phase liquid, wherein
the channel has a main channel which allows flow of the continuous phase liquid, and an auxiliary channel which is connected to a predetermined portion of the main channel to guide the dispersed phase liquid to the main channel, the predetermined portion being a portion between both ends of the main channel,
the flow path device has an inner wall surface which encloses the main channel to define the main channel,
the main channel has a connecting port formed in the inner wall surface and communicated with the auxiliary channel, and
the inner wall surface has an enlarged surface provided at a position on a downstream side of the connecting port in the main channel, and the enlarged surface spreads to outside of the main channel so as to promote removal of the dispersed phase liquid from the inner wall surface, the dispersed phase liquid being adhered to the inner wall surface in consequence of flowing from the auxiliary channel into the main channel through the connecting port.

2. The flow path device according to claim 1, wherein
the inner wall surface has an adjacent inner wall surface adjacent to an upstream side of the enlarged surface, and
an inclination of a region of the inner wall surface from the enlarged surface to the adjacent inner wall surface discontinuously changes at a boundary between the enlarged surface and the adjacent inner wall surface.

3. The flow path device according to claim 1, wherein
the enlarged surface covers the connecting port when the enlarged surface is viewed from a downstream side of the enlarged surface toward the connecting port.

4. The flow path device according to claim 1, wherein
the main channel has an enlarged part having a periphery, at least a part of which is defined by the enlarged surface, and a downstream part which is located on the downstream side of the enlarged part, the enlarged part having a first cross-sectional area in an orthogonal direction orthogonal to an extending direction of the main channel, the downstream part having a second cross-sectional area in the orthogonal direction, and
the second cross-sectional area is smaller than the first cross-sectional area.

5. The flow path device according to claim 1, wherein
at least the one channel includes a plurality of the channels, and
the flow path device further comprises at least one channel layer in which the plurality of channels are disposed in parallel to each other.

6. The flow path device according to claim 5, wherein
at least the one channel layer includes a plurality of the channel layers laminated on each other.

7. A method for forming a dispersed phase droplet, comprising
a droplet forming step of forming a dispersed phase droplet in a continuous phase liquid by flowing the continuous phase liquid and a dispersed phase liquid in the channel in the flow path device according to any one of claims 1 to 6, wherein
the droplet forming step includes a flowing step of flowing the continuous phase liquid in the main channel, and flowing the dispersed phase liquid from the auxiliary channel into the main channel through the connecting port to flow the dispersed phase liquid in the main channel, and
in the flowing step, the continuous phase liquid and the dispersed phase liquid flow in the main channel such that the dispersed phase liquid flowing into the main channel is pushed by flow of the continuous phase liquid to move to a downstream side while being adhered to the inner wall surface, and is removed from the inner wall surface when reaching the enlarged surface to flow to the downstream side and be sheared, so that the dispersed phase liquid becomes the dispersed phase droplet.
